Europäisches Patentamt

European Patent Office

Office européen des brevets

(11) Publication number: **0 395 767**
**A1**

(12)
# EUROPEAN PATENT APPLICATION
## published in accordance with Art. 158(3) EPC

(21) Application number: 89902696.7

(22) Date of filing: 04.11.88

(86) International application number:
PCT/SU88/00225

(87) International publication number:
WO 90/05197 (17.05.90 90/11)

(51) Int. Cl.5: **C21C 1/10, C22C 33/10**

(43) Date of publication of application:
**07.11.90 Bulletin 90/45**

(84) Designated Contracting States:
**AT CH DE FR GB IT LI SE**

(71) Applicant: **NAUCHNO-PROIZVODSTVENNOE OBIEDINENIE PO TEKHNOLOGII MASHINOSTROENIA "TSNIITMASH"**
**ul. Sharikopodshipnikovskaya 4**
**Moscow, 109088(SU)**

(72) Inventor: **ALEXANDROV, Nikolai Nikitievich**
**ul. Sharikopodshipnikovskaya, 2-126**
**Moscow, 109088(SU)**
Inventor: **KOVALEVICH, Evgeny Vladimirovich**
**Frunzenskaya nab., 24-38**
**Moscow, 119146(SU)**
Inventor: **PESTOV, Evgeny Stepanovich**
**Bykovskoe shosse, 37-1 Moskovskaya obl.**
**pos. Malakhovka, 140090(SU)**
Inventor: **MAGAZNOV, Vyacheslav Dmitrievich**
**1 Dubrovskaya ul., 5-6-10**
**Moscow, 109044(SU)**
Inventor: **SLJUSAR, Anatoly Nikolaevich**
**ul. Fugina, 11-11**
**Dnepropetrovsk, 320037(SU)**
Inventor: **KAZACHENKO, Nikolai Sergeevich**
**ul. Leningradskaya, 20-41**
**Dnepropetrovsk, 320027(SU)**

(74) Representative: **Lerwill, John et al**
**A.A. Thornton & Co. Northumberland House**
**303-306 High Holborn**
**London, WC1V 7LE(GB)**

(54) **METHOD OF OBTAINING SPHEROIDAL GRAPHITE CAST IRON.**

(57) The method provides for charging the casting ladle with a mixture containing magnesium and ferrosilicium at a ratio of 1:10 to 1:20, adding to it steel cuttings and pouring into the ladle molten cast iron. The mixture contains the magnesium in the powder form with particles of 0.05 to 0.3 mm and the fer-

rosilicium in the powder form with particles of 0.05 to
0.2 mm.

METHOD OF PRODUCING SPHEROIDAL <span>TITLE MODIFIED</span>
GRAPHITE CAST IRON  see front page

## Industrial Field

The present invention relates to foundry-work and has specific reference to a method of producing spheroidal graphite cast iron.

## Prior Art

Known in the art is a method of producing spheroidal graphite cast iron in the open-type ladle (Vashenko K.I., Sofroni L., Magnesium-Treated Cast Iron, Mashgiz, 1960, pp. 124, 125). Put in the ladle bottom is a mixture comprising 10-15% magnesium chip with a thickness of 0.5 mm and 85-90% ferro-silicon in 3-5 mm lumps which is overlaid with steel crop ends or scissel, and molten cast iron is poured then into the ladle.

A violent thermal outburst, involving spitting and smoke generation, is unavoidable in employing the known method of producing spheroidal cast iron. It results from inadequate comminution of the modifying mixture. Some more of less coarse particles of magnesium have time to rise to the surface of molten cast iron and burn up in air. The thermal outburst and heavy smoke have not only an adverse effect on the occupational hygiene in the shop; besides, the magnesium utilization factor is reduced by 20-50%.

The disclosed method is a close second of a method of producing spheroidal graphite cast iron (SU; A; 834,188) employing a modifying mixture of a composition as follows (in % by mass): 3-30 magnesium, 40-96 ferro-silicon, 1-30 ferrochromous slag. The particle size of the modifying mixture is 1.0 mm, and for the rest this method of producing cast iron repeats the one referred to hereinabove.

The modifying mixture compsising components which all have a particle size of 1 mm lends itself more readily to good intermixing, and this abates the thermal outburst and smoke generation. However, the oxides of silicon and chromium present in the ferrochromous slag require magnesium for their reduction. This calls for increasing the amount of added magnesium and the total amount of mixture up to 2.5% in order to produce spheroidal graphite cast iron. An increased amount of the mixture cools down the cast iron and for its heating up there is a need in an electric furnace. Chromium carbide formed in the cast iron due to the presence of chromium in the mixture leads to unwanted chilling, in thin-walled castings before all.

Summary of the Invention

The principal object of the invention is to provide a method of producing spheroidal graphite cast iron in the open-type ladle by employing a modifying mixture which is of a composition, and is used in a quantity, eliminating thermal outburst and smoke generation, improving thus the occupational hygiene in foundry-work and reducing the requirements in costly magnesium.

This object is realized by disclosing a method of producing spheroidal graphite cast iron in the open-type ladle consisting in placing a mixture of magnesium and ferro-silicon taken in a proportion between 1:10 and 1:20, respectively, in the ladle bottom, overlaying the mixture with steel crop ends and pouring molten cast iron into the ladle wherein according to the invention the mixture comprises magnesium in the form of powder with a particle size of 0.05-0.3 mm and ferro-silicon in the form of powder with a particle size of 0.05-2.0 mm.

The disclosed mixture consisting of fine powders of magnesium and ferro-silicon renders the producing of spheroidal graphite cast iron a stable process which

- 3 -

is practically free from thermal outburst, emits little smoke and is characterized by a magnesium utilization factor of over 90%. The fine particles of magnesium assimilate themselves in the melt on being molten before rising to the surface. No magnesium burns up uselessly in air.

It is expedient that the particles of magnesium powder have a size of 0.1-0.145 mm and those of ferro-silicon powder, 0.15-1.0 mm. Practical experience goes to snow that the finer the modifying fraction, the more quiter is the process of modifying. Therefore, a maximum effect can be obtained by using powders of magnesium and ferro-silicon with particles less than 0.05 mm. However, the separation of particles with a size less than 0.1 mm is a technically difficult problem now. Magnesium particles coarser than 0.145 mm cannot be recommended, for a thermal outburst with all its after-effects begins to manifest itself in this case.

Particles of the ferro-silicon which are greater than 1.0 mm are inefficious, for they enhance dimensional difference between the fractions of the mixture which leads to lack of homogeneity during intermixing and poor modifying effect.

It is also expedient from the standpoint of processing to employ a mixture which additionally incorporates magnesite in the form of powder with the particles of a size 0.05-1.0 mm, whereby the composition of the mixture is as follows (% by mass):

magnesium, 5 - 9;

magnesite, 10 - 50;

ferro-silicon, the balance.

The use of magnesite powder as a component of the modifying mixture in producing spheroidal graphite cast iron promotes process stability, eliminating thermal outburst.

- 4 -

Neutrality with respect to the magnesium and cast iron components is a virtue of the magnesite. Its powder, when introduced into the mixture, enhances its inertness, retards the process of interaction with the molten metal. The column of metal formed above the mixture is of an adequate height so that the magnesium particles fully assimilate therein while passing therethrough.

The particles of magnesite of the disclosed size promote homogeneity of the mixture and uniform solubility of the magnesium during the modification.

The magnesite powder with particles coarser than 1 mm does not promote homogeneity of the mixture in intermixing and this, in its turn, reduces the amount of assimilated magnesium. Magnesite powder with particles less than 0.05 mm is not available on an industrial scale.

A magnesite powder content less than 10% by mass has practically no influence on the process of modification. A content over 10% by mass makes the process steadier due to a rise in the inertness of the mixture. A content over 50% by mass has a heavy retarding effect on the reaction which may die away unless stimulated from the outside.

A magnesium content of the mixture which is less than 5% by mass calls for increasing the percentage of the mixture in a batch in order to introduce an appropriate amount of magnesium into the cast iron. This is a disadvantage, for a too high percentage of the mixture lengthens the period of reaction and brings about chilling of the molten cast iron.

A magnesium content of the mixture which exceeds 9% by mass is a disadvantage as well, for it leads to a superfluous enrichment of the mixture with magnesium.

A preferred embodiment of the present invention will now be described by way of example.

Embodiment

Disclosed is a method of producing spheroidal graphite cast iron which uses an open-type ladle of any capacity provided with a partition in refractory brick at the bottom. A modifying mixture comprising magnesium powder with a particle size of 0.05-0.3 mm, taken in an amount of 0.05-0.1% of the mass of the cast iron to be treated, and ferro-silicon with a particle size of 0.05-2 mm, taken in an amount so that the magnesium--to-ferro-silicon ratio is 1:10-1:20, respectively, is placed into a section of the ladle. The composition of the mixture is (% by mass):

magnesium, 4 - 9;

ferro-silicon, the balance.

To avoid direct contact between the molten metal and mixture at an early stage of the process, the mixture is overlaid with steel crop ends, scissel or cast iron chip taken in an amount of 1% of the mass of the cast iron to be treated. Molten cast iron is poured into the free section of the ladle at a temperature of 1300-1460°C. The initial composition of the cast iron is (%): carbon, 3.0-3.5; silicon, 1.0-2.0; manganese, 0.2-0.55; phosphorus, 0.03-0.05; sulphur, 0.02-0.1; chromium, 0.12-0.20. The duration of the process of modification varies with the mass of treated cast iron. For example, 4-5 min are required to modify 5 t of cast iron at 1380°. The temperature decreases by 30-40°C.

When cast iron with an initial temperature over 1400°C is subjected to modification, preference is given to a particulate mixture additionally incorporated whereinto is magnesite with a particle size of 0.05-2 mm. The composition of the mixture is then as follows (% by mass):

- 6 -

magnesium, 5 - 9;

magnesite, 10- 50;

ferro-silicon, the balance.

The magnesite powder imparts extra inertness to the mixture, puts off the beginning of its reaction with the molten metal. A column of molten metal formed above the mixture acquires during this delay a height enabling the particles to assimilate in the cast iron during the passage therethrough. No thermal outburst occurs in this case, and the process of modification goes on steadily.

Concrete data exemplifying the results of utilizing the disclosed mixture are tabulated below.

Table

| Test ref. No | Name of component | Content of components, % | Particle size of components, mm |
|---|---|---|---|
| 1 | 2 | 3 | 4 |
| 1 | Magnesium | 5 | 0.05 - 0.15 |
|  | Ferro-silicon | 95 | 0.05 - 1.0 |
| 2 | Magnesium | 5 | 0.05 - 0.3 |
|  | Ferro-silicon | 95 | 0.05 - 2 |
| 3 | Magnesium | 7 | 0.1 - 0.145 |
|  | Ferro-silicon | 93 | 0.1 - 1.0 |
| 4 | Magnesium | 9 | 0.05 - 0.145 |
|  | Ferro-silicon | 91 | 0.05 - 1 |
| 5 | Magnesium | 5 | 0.05 - 0.15 |
|  | Ferro-silicon | 65 | 0.05 - 2 |
| 6 | Magnesite | 30 | 0.05- 2 |
| 7 | Magnesium | 9 | 0.1 - 0.145 |
|  | Ferro-silicon | 45 | 0.1- 1.0 |
|  | Magnesite | 46 | 0.1 - 1.0 |

- 7 -

| 1 | 2 | 3 | 4 |
|---|---|---|---|
| 8 | Magnesium | 7 | 0.05 - 0.3 |
|   | Ferro-silicon | 10 | 0.05 - 2 |
|   | Magnesite | 83 | 0.05 - 2 |
| 9 | Magnesium | 5 | 0.05 - 0.15 |
|   | Ferro-silicon | 10 | 0.05 - 2 |
|   | Magnesite | 85 | 0.05 - 2 |
| 10 | Magnesium | 5 | 0.05 - 0.15 |
|   | Ferro-silicon | 50 | 0.05 - 2 |
|   | Magnesite | 45 | 0.05 - 2 |

Table, continued

| Test ref. No | Content of mixture in batch, % | Residual content of magnesium in cast iron, % | Features of process |
|---|---|---|---|
| 1 | 2 | 3 | 4 |
| 1 | 1.7 | 0.066 | Steady reaction, slight glowing |
| 2 | 1.5 | 0.049 | Lively reaction, glowing |
| 3 | 1.7 | 0.057 | Steady reaction, slight glowing |

- 8 -

Table, continued

| 1 | 5 | 6 | 7 |
| --- | --- | --- | --- |
| 4 | 1.5 | 0.053 | Lively reaction, glowing |
| 5 | 1.5 | 0.046 | No thermal outburst |
| 6 | 1.5 | 0.048 | Lively reaction without thermal outburst, glowing |
| 7 | 1.5 | 0.046 | Slight thermal outburst |
| 8 | 1.0 | 0.041 | Steady reaction, slight glowing |
| 9 | 1.5 | 0.043 | Steady reaction, glowing |

Summing up, the disclosed method of modifying which resorts to magnesium powder with a particles size of 0.05 - 0.145 mm, to ferro-silicon and magnesite with particles between 0.04 mm and 2 mm is associated with neither a thermal outburst nor smoke generation and is a step towards an improvement of the occupational hygiene compared with other ways of modification in the open-type ladle. The requirements in costly magnesium amount during the process only to 0.05 - 0.1% of the mass of the treated cast iron. An improvement in the magnesium utilization factor during the modification is conducive to producing spheroidal graphite cast iron without a hitch.

Industrial Applicability

Bringing the disclosed method into commercial practics affords an opportunity for rejecting costly equip-

- 9 -

ment for the production of spheroidal graphite cast
iron (autoclaves, converter ladles), promising much
economic gain.

C L A I M S

1. A method of producing spheroidal graphite cast iron in the open-type ladle consisting in placing a mixture of magnesium and ferro-silicon taken in a proportion between 1:10 and 1:20, respectively, in the ladle bottom, overlaying the mixture with steel crop ends and pouring molten cast iron into the ladle, c h a r a c t e r i z e d  in that the mixture comprises magnesium in the form of powder with a particle size of 0.05 - 0.3 mm and ferro-silicon in the form of powder with a particle size of 0.05 - 2.0 mm.

2. A method as in claim 1, c h a r a c t e r i z - e d  in that the particle size of the magnesium powder is 0.1-0.145 mm and that of the ferro-silicon, 0.1 - 1.0 mm.

3. A method as in claim 1, c h a r a c t e r - i z e d  i n  that  additionally incorporated into the mixture is magnesite in the form of powder with a particle size of 0.05 - 1.00 mm, whereby the composition of the mixture is as follows (% by mass):

magnesium, 5 - 9;
magnesite, 10 - 50;
ferro-silicon, the balance.

# INTERNATIONAL SEARCH REPORT

International Application No PCT/SU 88/00225

## I. CLASSIFICATION OF SUBJECT MATTER (if several classification symbols apply, indicate all) *

According to International Patent Classification (IPC) or to both National Classification and IPC

$IPC^4$ C 21 C 1/10, C 22 C 33/10

## II. FIELDS SEARCHED

Minimum Documentation Searched [7]

| Classification System | Classification Symbols |
|---|---|
| $IPC^4$ | C 21 C 1/10, C 22 C 33/10, 37/04 |

Documentation Searched other than Minimum Documentation
to the Extent that such Documents are Included in the Fields Searched [8]

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| A | Sbornik "Tekhnologia liteinogo proizvodstva, Povyshenie kachestva chugunnykh otlivok modifitsirovaniem", seria C-6-1, 1982, Ministerstvo stankostroitelnoi i instrumentalnoi promyshlennosti (Moscow), pages 15-21 | 1 |
| A | SU, A1, 452596, (Institut problem litiya AN USSR), 30 May 1975 (30.05.75), see the claims | 3 |
| A | SU, A1, 834188, (Institut problem litiya AN USSR), 05 June 1981 (05.06.81), (cited in the description) | 3 |
| A | SU, A1, 1199803, (Institut problem litiya AN USSR), 23 December 1985 (23.12.85), see the claims | 1,3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 23 June 1989 (23.06.89) | 24 July 1989 (24.07.89) |
| International Searching Authority ISA/SU | Signature of Authorized Officer |

Form PCT/ISA/210 (second sheet) (January 1985)